# EUROPEAN PATENT APPLICATION

(11) **EP 2 573 197 A1**
(43) Date of publication of application: **27.03.2013**
(21) Application number: 11783578.5
(22) Date of filing: 18.05.2011
(51) Int. Cl.: C22B 23/00, C22B 3/04, C22B 3/44

(54) **METHOD FOR CONTROLLING REACTION IN SULFURATION REACTION STEP**

(30) Priority: 18.05.2010 JP 2010114473
(71) Applicant: Sumitomo Metal Mining Co., Ltd., Tokyo 105-8716 (JP)
(72) Inventor: SHINGU, Masahiro, Tokyo 105-8716 (JP); ENDOU, Shuuji, Tokyo 105-8716 (JP); NISHIKAWA, Isao, Tokyo 105-8716 (JP)
(74) Representative: Müller-Boré & Partner Patentanwälte
(86) International application number: PCT/JP2011/061400
(87) International publication number: WO 2011/145644

(57) **Abstract**

The present invention provides a method that can reduce the formation of adhering matter to inner walls of a reaction vessel, a pipe, and the like without a decrease in nickel recovery, and, as compared with the prior arts, can reduce the frequency of removal of the adhering matter to the inner wall. According to the present invention, in a method for controlling a reaction in a sulfuration reaction step in which a sulfide containing nickel and a barren solution are formed by blowing hydrogen sulfide gas into a sulfate solution containing at least nickel, a reaction temperature in a sulfuration reaction is controlled to be 60 to 70 degrees C, while a pressure inside a reaction vessel for the sulfuration reaction is controlled to be 200 to 300 kPaG.

## Description

### Field of the Invention

This invention relates to a method for controlling a reaction in a sulfuration reaction step, and more specifically relates to a technique to control adhesion of a sulfide product to an inner surface of a reaction vessel in a sulfuration reaction step of forming a sulfide containing nickel and a barren solution by blowing hydrogen sulfide gas into a sulfate solution at least containing nickel. Particularly, in hydrometallurgy which is based on high pressure acid leaching to recover nickel from nickel oxide ores, the method of the present invention is used as a method for controlling a reaction in a sulfuration reaction step for a sulfuric acid solution containing at least nickel.
The present application asserts priority rights based on JP Patent Application 2010-114473 filed in Japan on May 18, 2010. The total contents of disclosure of the Patent Application of the senior filing date are to be incorporated by reference into the present Application.

### Background of the Invention

In recent years, high pressure acid leaching using sulfuric acid has been attracting attention as hydrometallurgy for nickel oxide ores. Unlike pyrometallurgy, which is a conventional common smelting method for nickel oxide ores, this method does not include pyrometallurgical processes, such as reduction and drying, but includes consistent hydrometallurgical processes, and thus is advantageous in terms of energy and cost, in addition, has an advantage that a nickel sulfide whose nickel grade is improved up to approximately 50% by weight can be obtained. This nickel sulfide is usually precipitated and formed by blowing hydrogen sulfide gas after purifying a leachate.

In a step in which hydrogen sulfide gas is blown into a solution in a sulfuric acid bath containing at least nickel to obtain a sulfide containing nickel (hereinafter, referred to as a "sulfuration reaction step"), conventionally, by setting a sulfuration reaction temperature to approximately 100 degrees C or higher, a reaction rate has been increased, whereby improvement in reaction efficiency has been attempted.

According to this method, although a reaction rate is increased, a sulfuration reaction proceeds easily in an inner wall of a reaction vessel and in an inner wall of a pipe (hereinafter, may be collectively simply referred to as an "inner wall", as needed), and accordingly a reaction product adheres to the inner wall. This causes a decrease in capacity inside a reaction vessel and a shorter residence time of a sulfate solution containing at least nickel inside the reaction vessel. Furthermore, a flow rate load decreases due to pipe blockage, whereby reaction efficiency declines. Also, removal of the matter adhering to the inner wall is required, and, during this removal, an operation basically needs to be stopped, and accordingly a problem that an operation rate falls occurs.

However, as a countermeasure against this problem, in the case where an amount of blowing hydrogen sulfide gas is decreased to control formation of a sulfide adhering to an inner wall, reaction efficiency of a sulfuration reaction decreases, and a nickel concentration in a barren solution obtained after the reaction increases, whereby a nickel recovery falls. Therefore, in order to perform an operation at a higher operation rate, formation of a sulfide adhering to an inner wall needs to be controlled by controlling a reaction rate at an early reaction stage with other means.

With regard to this point, for example, PTL 1 (Japanese Patent Application Laid-Open No. 2008-231470) proposes a technique that, by circulating a reaction product in a reaction vessel as a seed crystal of a sulfuration reaction, operates a sulfuration reaction at a temperature of 70 to 90 degrees C, which is lower than the conventional temperature conditions, without a decrease in nickel recovery. Use of this technique enabled adhesion of a sulfide to an inner wall to be effectively decreased, and, for example, enabled removal of adhering matter to the inner wall to be needed only once in half a year while conventionally to be needed once in 2 to 3 months.

However, as mentioned above, since the removal of the sulfide adhering to the reaction vessel needs to be carried out not only for the inner wall of a reaction vessel but also for the inner wall of a pipe, enormous time and labor are needed, and therefore it has been required that the frequency of the removal is further decreased.

### Prior-Art Documents

### Patent Document

PTL 1: Japanese Patent Application Laid-Open No. 2008-231470

### Summary of the Invention

The present invention is proposed in view of such actual circumstances, and aims to provide a method for controlling a reaction in a sulfuration reaction step, the method enabling formation of a matter adhering to an inner wall of a reaction vessel, a pipe, or the like to be controlled without a decrease in nickel recovery, and enabling the frequency of removal of adhering matter to the inner wall to be decreased as compared with the prior arts.

In order to achieve the above-mentioned purpose, the inventors earnestly studied a reaction step of forming a nickel sulfide by using hydrogen sulfide gas toward a sulfate solution containing at least nickel. As a result, the inventors found that, by making a sulfuration reaction proceed at a lower reaction temperature and a predetermined pressure, with a nickel recovery equivalent to that in the prior arts being maintained, formation of adhering matter to an inner wall of a reaction vessel was controlled, and the frequency of removal of adhering matter was decreased, and accordingly the present invention was accomplished.

That is, a method for controlling a reaction in a sulfuration reaction step according to the present invention is characterized in that, in the method for controlling the reaction in the sulfuration reaction step to form a sulfide containing nickel and a barren solution by blowing hydrogen sulfide gas into a sulfate solution containing at least nickel, a reaction temperature of the sulfuration reaction is controlled to be 60 to 70 degrees C, while a pressure inside a reaction vessel in said sulfuration reaction is controlled to be 200 to 300 kPaG.

Here, the above-mentioned sulfate solution containing nickel is a mother liquor recovered through a leaching step, a solid-liquid separation step, and a neutralization step, in hydrometallurgy which is based on high pressure acid leaching to recover nickel from nickel oxide ores.

### Effects of Invention

The method for controlling the reaction in the sulfuration reaction step according to the present invention enables formation of adhering matter to an inner wall of a reaction vessel, a pipe, or the like to be controlled without a decrease in nickel recovery, and enables the frequency of removal of the adhering matter to the inner wall to be decreased, and accordingly is of great industrial value.

### Brief Description of Drawings

Figure 1 is a flowchart illustrating an example of an embodiment of high pressure acid leaching of a nickel oxide ore.
Figure 2 is a diagram illustrating an example of an equipment arrangement in a sulfuration reaction step.

### Detailed Description of the Invention

A method for controlling a reaction in a sulfuration reaction step according to the present invention is such that a sulfide containing nickel and a barren solution are formed by blowing hydrogen sulfide gas into a sulfate solution containing at least nickel. Hereinafter, with reference to drawings, there will be explained in detail an embodiment where the method for controlling the reaction in the sulfuration reaction step according to the present invention is used in high pressure acid leaching, which is hydrometallurgy of a nickel oxide ore.

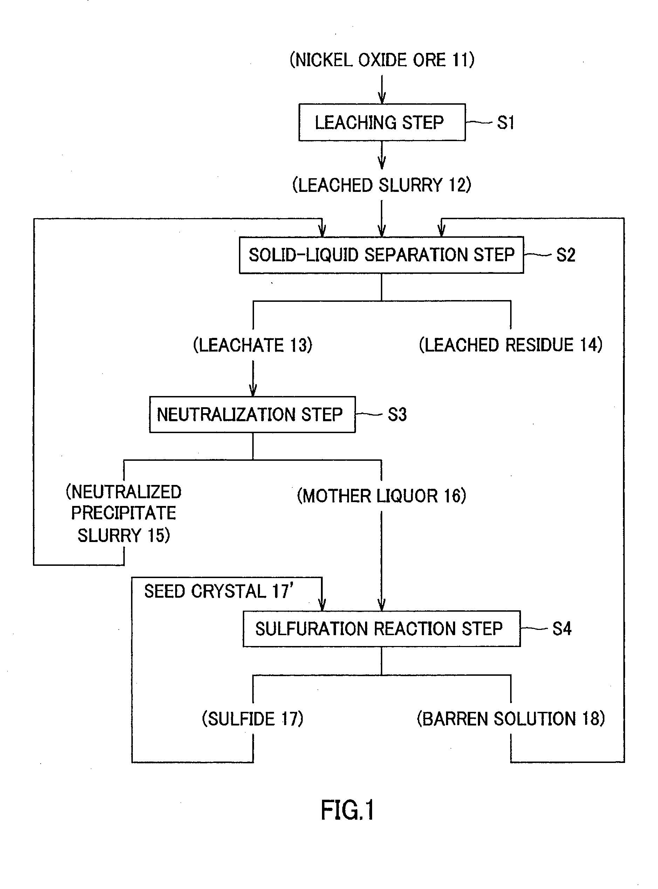

Figure 1 is a smelting flowchart illustrating an example of an embodiment of high pressure acid leaching of a nickel oxide ore. As illustrated in Fig. 1, the high pressure acid leaching of a nickel oxide ore comprises: first, a leaching step S1, wherein sulfuric acid is added to a nickel oxide ore 11, and high pressure acid leaching is carried out to obtain a leached slurry 12; a solid-liquid separation step S2, wherein multistage washing is performed for the leached slurry 12 obtained in the leaching step S1, whereby the leached slurry 12 is separated into a leachate 13 containing nickel and cobalt and a leached residue 14; a neutralization step S3, wherein free sulfuric acid and impurities, such as iron and aluminum, which are contained in the separated leachate 13 are neutralized to form a neutralized precipitate slurry 15 containing trivalent iron hydroxide and a mother liquor 16 for nickel recovery; and a sulfuration reaction step S4, wherein hydrogen sulfide gas is added to the mother liquor 16 to form a sulfide 17 containing nickel and cobalt and a barren solution 18 from which nickel and the like are removed. Note that the sulfide 17 formed in the sulfuration reaction step S4 can be used by circulating in the sulfuration reaction step S4. More details will be described later. Hereinafter, each step of the high pressure acid leaching will be explained in further detail.

### (1) Leaching step

In the leaching step S 1, sulfuric acid is added to a slurry of the nickel oxide ore 11, and stirring treatment is carried out under a temperature of 220 to 280 degrees C, whereby the leached slurry 12 composed of a leached residue and a leachate is formed. In this leaching step S1, for example, a high temperature pressurizing vessel (autoclave) is used.

Examples of the nickel oxide ore 11 used in the leaching step S 1 mainly include what is called laterite ore, such as limonite ore and saprolite ore. A nickel content of laterite ore is usually 0.8 to 2.5% by weight, and the nickel is contained as a hydroxide or a magnesium silicate mineral. An iron content thereof is 10 to 50 % by weight, and the iron is mainly in a form of trivalent hydroxide (goethite), but, divalent iron is partially contained in the magnesium silicate mineral.

In the leaching step S1, leaching as a sulfate containing nickel, cobalt, and the like, and fixation as a hematite of leached iron sulfate are performed by a leaching reaction and a high temperature hydrolysis which are represented by the following formulas (I) to (V). Note that, since the fixation of iron ions does not completely proceed, divalent and trivalent iron ions as well as nickel, cobalt, and the like are contained in a liquid portion of the obtained leached slurry.

### <Leaching reaction>

MO + H₂SO₄ → MSO₄ + H₂O (I)

(wherein, M represents Ni, Co, Fe, Zn, Cu, Mg, Cr, Mn, or the like.)

2Fe(OH)₃ + 3H₂SO₄ → Fe₂(SO₄)₃ + 6H₂O (II)

FeO ⁺H₂SO₄ → FeSO₄ + H₂O (III)

### <High temperature hydrolysis>

2FeSO₄ + H₂SO₄ + 1/2O₂ → Fe₂(SO₄)₃+H₂O (IV)

Fe₂(SO₄)₃ + 3H₂O → Fe₂O₃ + 3H₂SO₄ (V)

A slurry concentration in the leaching step S 1 is not particularly limited, but a slurry concentration of the leached slurry 12 is preferably prepared to be 15 to 45% by weight.

An amount of sulfuric acid used in the leaching step S 1 is not particularly limited, but an excessive amount enough to leach iron in the nickel oxide ore 11 is used. For example, 200 to 400 kg of sulfuric acid is used per ton of ore. If an addition amount of sulfuric acid per ton of ore exceeds 400 kg, sulfuric acid cost becomes higher, which is not preferable.

### (2) Solid-liquid separation step

In the solid-liquid separation step S2, multistage washing is performed for the leached slurry 12 formed in the leaching step S1, whereby the leachate 13 containing nickel and cobalt, and the leached residue 14 are obtained.

In the solid-liquid separation step S2, after mixing the leached slurry 12 with a washing liquid, solid-liquid separation is performed using a thickening apparatus. Specifically, first, the leached slurry 12 is diluted and washed by a washing liquid, and then, the leached residue 14 is condensed as a precipitate in a thickening apparatus to decrease an amount of nickel adhering to the leached residue 14 depending on the degree of the dilution. In an actual operation, thickening apparatuses having such function are multistage-connected and used. Note that, as a washing liquid, there is suitably used the barren solution 18 obtained after recovering nickel and cobalt in the sulfuration reaction step S4 described later.

The multistage washing in the solid-liquid separation step S2 is not particularly limited, but there is preferably used counter-current decantation (CCD method) to bring a washing liquid not containing nickel into contact with a counter-current. Thus, a washing liquid to be newly introduced in a system can be cut, while recoveries of nickel and cobalt can be 95% or more.

### (3) Neutralization step

In the neutralization step S3, while oxidation of the leachate 13 obtained in the above-mentioned solid-liquid separation step S2 is inhibited, calcium carbonate is added so that the leachate 13 has a pH of 4 or less, whereby the neutralized precipitate slurry 15 containing trivalent iron and the mother liquor 16 for nickel recovery are formed. Thus, excessive acid used in the leaching step S1 by high pressure acid leaching is neutralized, and also, trivalent iron ions, aluminum ions, and the like, which remain in the solution, are removed.

A pH condition in the neutralization step S3 is preferably 4 or less, more preferably 3.2 to 3.8. When the pH exceeds 4, generation of nickel hydroxide is increased.

In the neutralization step S3, when trivalent iron ions remaining in the solution is removed, it is preferable not to oxidize the iron ions which exist as divalent ions in the solution, and preferable to prevent blowing-in of air and oxidation of the solution as much as possible. Thus, increase in a consumption amount of calcium carbonate and in a generation amount of the neutralized precipitate slurry 15, which accompanies removal of divalent iron, can be controlled. That is, increase in nickel loss into the precipitate due to increase in an amount of the neutralized precipitate slurry 15 can be controlled.

A temperature condition in the neutralization step S3 is preferably 50 to 80 degrees C. When the temperature condition is lower than 50 degrees C, the precipitate is fine, whereby an adverse effect is brought in the solid-liquid separation step S2 in which the precipitate is circulated. On the other hand, when the temperature condition is higher than 80 degrees C, decrease in corrosion resistance of apparatus materials and increase in energy cost for heating are caused.

### (4) Sulfuration reaction step

In the sulfuration reaction step S4, hydrogen sulfide gas is blown into the mother liquor 16 for nickel recovery formed by the neutralization step S3, whereby the sulfide 17 containing nickel and cobalt and the barren solution 18 are formed.

Here, in this sulfuration reaction step S4, a sulfide is circulated and used as a seed crystal, the sulfide having an amount 4 to 6 times, preferably 4 to 5 times as much as an amount of nickel contained in the mother liquor 16. Thus, adhesion of the sulfide to an inner surface of a sulfuration reaction vessel can be controlled, and also, a nickel concentration in the barren solution 18 can be stabilized at a lower level than in the prior arts.

That is, the sulfide circulated in the sulfuration reaction step S4 becomes a nucleus for generation of the sulfide 17 which is to newly generate, and therefore, even under a relatively low temperature condition in which a reaction rate is slow, a sufficient generation rate of the sulfide 17 is maintainable. Also, existence of the nucleus for generation of the sulfide 17 allows particles of the sulfide 17 to be formed to be comparatively large, and therefore, a residence time inside the sulfuration reaction vessel is shorter, and also, the adhesion inside the sulfuration reaction vessel is prevented.

Note that, when an amount of the sulfide 17 used to be circulated as a seed crystal is less than 4 times as much as an amount of nickel contained in the mother liquor 16, a nickel concentration in the barren solution 18 increases, and a nickel recovery decreases. On the other hand, when an amount of the sulfide 17 used to be circulated is more than 6 times, any further effect cannot be expected.

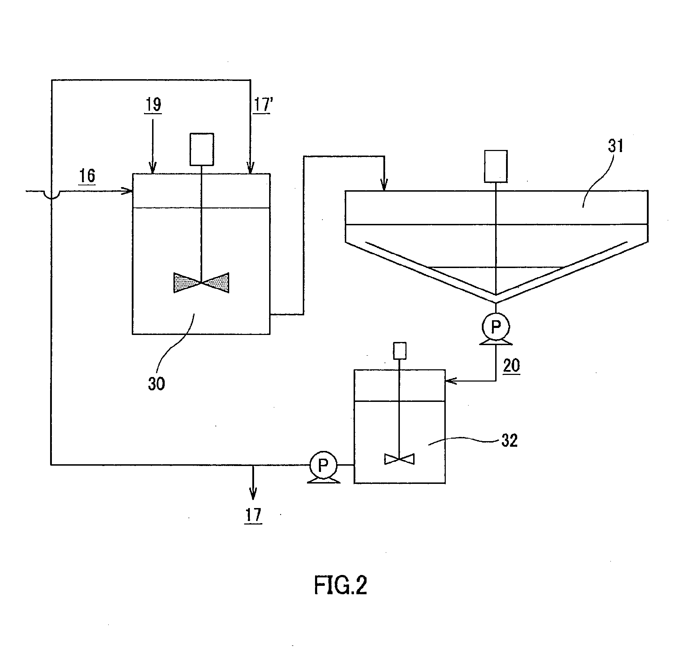

Fig. 2 is a schematic diagram illustrating an example of an equipment arrangement in the sulfuration reaction step. As illustrated in Fig. 2, in a stirring sulfuration reaction tank (sulfuration reaction vessel) 30, a seed crystal 17' composed of circulated sulfide slurry is added into the mother liquor 16 (reaction starting solution) composed of a sulfate solution containing nickel and cobalt, and furthermore, hydrogen sulfide gas 19 is blown thereinto to perform a sulfuration reaction.

A slurry after the reaction is channeled into a precipitation tank 31, such as a thickening apparatus, and the sulfide 17 containing nickel is separated from the bottom of the precipitation tank 31 as a concentrate slurry 20. The concentrate slurry 20 separated is distributed at a predetermined rate via a relay tank 32, and circulated to the stirring sulfuration reaction tank 30. On the other hand, a sulfide 17 to be recovered is extracted from the relay tank 32 and processed at a next step. Note that a flow rate of a starting solution for the sulfuration reaction step S4 is measured and adjusted, and, in the case where the flow rate varies, a flow rate of the concentrate slurry 20 obtained from the precipitation tank 31 is adjusted. Thus, the nickel concentration of the barren solution 18 is controlled so as to be maintained.

When zinc is contained in the mother liquor 16, a step of selectively separating zinc as a sulfide can be performed prior to a step of separating nickel and cobalt as the sulfide 17. Specifically, at the time of a sulfuration reaction, a reaction condition is weakened to control a sulfuration reaction rate, whereby coprecipitation of nickel which coexists with zinc in higher concentration than zinc is controlled, and zinc is preferentially selectively-removed.

As the mother liquor 16, there can be used, for example, a liquid having a pH of 3.2 to 4.0, a nickel concentration of 2.0 to 5.0 g/L, and a cobalt concentration of 0.10 to 1.0 g/L, and including iron, magnesium, manganese, and the like as impurity components. These impurity components greatly change depending on oxidation-reduction potential in leaching, operational conditions of autoclaves, and ore grades, but, generally, several g/L of iron, magnesium, and manganese are contained. Here, the impurity components are relatively more included with respect to nickel and cobalt each of which is to be recovered, but have low stability as a sulfide, and therefore, iron, manganese, alkali metal, and alkaline earth metals, such as magnesium, are not contained in a sulfide which is to be formed.

By the sulfuration reaction step S4, there are obtained the sulfide 17 containing nickel and cobalt and having a small impurity content, and the barren solution 18 in which a nickel concentration is stabilized at a low level. The barren solution 18 has a pH of approximately 1.0 to 3.0 and contains impurity elements such as iron, magnesium, and manganese, contained without sulfuration. Also, nickel and cobalt to be recovery loss are contained, but, the content is small, for example, the nickel content and the cobalt content are not more than 40 mg/L, and not more than 5 mg/L, respectively. The barren solution 18 includes little nickel and has a low pH, thereby not causing formation of hydroxide even if used as a washing liquid in the solid-liquid separation step S2. Furthermore, by using the barren solution 18 as a washing liquid in the solid-liquid separation step S2, an amount of industrial water used is reducible.

The method for controlling the reaction according to the present embodiment is such that, in the above-mentioned sulfuration reaction step S4 of forming the sulfide 17 containing nickel and the barren solution 18 by blowing hydrogen sulfide gas into a sulfate solution containing at least nickel, a reaction temperature in the sulfuration reaction is controlled to be 60 to 70 degrees C, while a pressure inside the sulfuration reaction vessel 30 is controlled to be 200 to 300 kPaG.

By controlling the sulfuration reaction temperature in the sulfuration reaction step S4 to be 60 to 70 degrees C, a sulfuration reaction in which a seed crystal is used as a nucleus can be made to proceed with more priority than a sulfuration reaction caused on an inner wall of the sulfuration reaction vessel 30. That is, by controlling the sulfuration reaction temperature to be 60 to 70 degrees C, a sulfuration reaction rate can be decreased, whereby formation of a sulfide adhering to the inner walls of the sulfuration reaction vessel 30 and a pipe can be controlled and an adhering amount of the sulfide can be reduced.

When the reaction temperature is lower than 60 degrees C, a sulfuration reaction rate decreases too much, whereby operation efficiency is worsened. On the other hand, when the reaction temperature is higher than 70 degrees C, formation of a sulfide adhering to the inner walls of the sulfuration reaction vessel 30 and a pipe is promoted with increase in a reaction rate, whereby an adhering amount of the sulfide is increased.

Here, when the reaction temperature is thus reduced to 60 to 70 degrees C as compared with in the prior arts, there is decreased a reaction rate of a gas-liquid contact reaction of hydrogen sulfide gas to be added into the sulfuration reaction vessel 30 and the mother liquor 16 composed of a sulfate solution containing nickel; and therefore an reaction efficiency of a sulfuration reaction seems to decrease. However, as in the present embodiment, a solubility of hydrogen sulfide gas to be added into the mother liquor 16 can be raised by decreasing a temperature, and accordingly an amount of hydrogen sulfide gas dissolved in the mother liquor 16 can be increased.

Thus, an amount of the hydrogen sulfide gas dissolved is increased, whereby a reaction between hydrogen sulfide dissolved in the mother liquor 16 and nickel in the mother liquor 16 proceeds without contact with a gas phase, and accordingly a nickel concentration in the barren solution 18 at a reaction end point can be controlled as low as in the case where a reaction temperature condition is approximately 100 degrees C as in the prior arts, and as a result, a high nickel recovery is maintainable.

In other words, by reducing the reaction temperature to 60 to 70 degrees C as compared with the prior arts, a reaction rate of the gas-liquid contact reaction at an early reaction stage is decreased, and at the same time, a concentration of hydrogen sulfide dissolved in the mother liquor 16 is increased, whereby a sulfuration reaction in the mother liquor 16 is promoted, and a reaction efficiency of the whole sulfuration reaction can be maintained.

Furthermore, in the method for controlling the reaction in the sulfuration reaction step according to the present embodiment, while a reaction temperature of the sulfuration reaction is controlled to be 60 to 70 degrees C, a pressure in the sulfuration reaction vessel 30 in which the sulfuration reaction is performed is controlled to be 200 to 300 kPaG, more preferably 250 to 300 kPaG.

As mentioned above, the reaction temperature of the sulfuration reaction is lowered as compared with the prior arts, whereby a reaction rate decreases. However, a pressure in the sulfuration reaction vessel 30 is controlled to be 200 to 300 kPaG, whereby a solubility of hydrogen sulfide gas into the mother liquor 16 is further raised to increase an amount of hydrogen sulfide gas dissolved. Thus, a sulfuration reaction between hydrogen sulfide dissolved and nickel in the mother liquor 16 is made to proceed, whereby decrease in a reaction rate of a gas-liquid contact reaction due to decrease in temperature, and decrease in nickel recovery accompanying the decrease in the reaction rate can be prevented.

When a pressure inside the sulfuration reaction vessel 30 is lower than 200 kPaG, a concentration of hydrogen sulfide gas dissolved, which is a sulphidizing agent, is insufficient. On the other hand, when a pressure is higher than 300 kPaG, any further effect cannot be expected. Furthermore, from a viewpoint of more certainly securing a concentration of hydrogen sulfide dissolved, a pressure is preferably 250 kPaG or higher, and, with a pressure of 250 kPaG or higher, a nickel recovery can be further improved.

As mentioned above, the method for controlling the reaction in the sulfuration reaction step according to the present embodiment is such that, by lowering a sulfuration reaction temperature to 60 to 70 degrees C as compared with the prior arts, a reaction rate of a gas-liquid contact reaction at an early sulfuration reaction stage is reduced, whereby adhesion of a sulfide (reaction product) to an inner wall of a reaction vessel can be controlled efficiently, and also a concentration of hydrogen sulfide dissolved in the mother liquor 16 can be increased.

Furthermore, by controlling a pressure in the sulfuration reaction vessel 30 to be 200 to 300 kPaG, added hydrogen sulfide gas can be further promoted to be dissolved in the mother liquor 16 and accordingly the dissolved amount thereof can be increased, whereby sulfuration reaction in the mother liquor 16 can be made to proceed.

Thus, with a high nickel-recovery being maintained, formation of a sulfide adhering to an inner wall of the sulfuration reaction vessel 30 can be controlled to reduce an adhering amount of sulfide, whereby the frequency of removal of the adhering matter can be reduced. Specifically, the frequency of removal of the adhering matter can be reduced to be once per year, that is, half the frequency of that in the prior arts.

In addition, since the reaction temperature can be made lower as compared with the prior arts, an amount of heat source (steam) can be reduced, and there can be efficiently performed an operation which realizes a high nickel recovery while controlling adhesion of a sulfide to an inner wall of the sulfuration reaction vessel 30.

Hereinafter, specific examples according to the present invention will be described. Note that a range of the present invention is not limited to any of the following examples.

### Examples

In the examples, in a nickel-sulfide formation reaction, a nickel-cobalt mixed sulfate solution having a nickel concentration of 3.0 to 4.5 g/l and a cobalt concentration of 0.10 to 0.25 g/l was used as a mother liquor which is to be a reaction starting liquid. This mother liquor is composed of a sulfate solution containing nickel which is, as shown in Fig. 1, recovered through the leaching step S1, the solid-liquid separation step S2, and the neutralization step S3, in hydrometallurgy based on high pressure acid leaching to recover nickel from nickel oxide ores.

Nickel concentrations in the mother liquor 16 and a solution after completing a sulfuration reaction (barren solution 18) were measured by an ICP emission analysis or an atomic absorption method. A nickel recovery was expressed as a percentage of the nickel concentration in the barren solution 18 to the nickel concentration in the mother liquor 16.

As the seed crystal 17', the sulfide 17 (reaction product) having a nickel amount 5 times as much as a nickel amount contained in the mother liquor 16 was circulated and used.

### <Example 1>

A usual operation was performed at a mother liquor temperature of 66 degrees C and at a pressure inside a sulfuration reaction vessel of 226 kPaG.

As a result, a nickel recovery was 98.8%. Also, the frequency of removal of adhering matter to the sulfuration reaction vessel was once per year.

### <Example 2>

A usual operation was performed under the same conditions as Example 1, except that a temperature of the mother liquor was 63 degrees C.

As a result, a nickel recovery was 98.7%. Also, the frequency of removal of adhering matter to the sulfuration reaction vessel was once per year.

### <Example 3>

A usual operation was performed under the same conditions as Example 2, except that a pressure inside the sulfuration reaction vessel was 251 kPaG.

As a result, a nickel recovery was 99.0%. Also, the frequency of removal of adhering matter to the sulfuration reaction vessel was once per year.

### <Example 4>

A usual operation was performed under the same conditions as Example 2, except that a pressure inside the sulfuration reaction vessel was 290 kPaG.

As a result, a nickel recovery was 99.0%. Also, the frequency of removal of adhering matter to the sulfuration reaction vessel was once per year.

### <Comparative Example 1>

A usual operation was performed under the same conditions as Example 1, except that a temperature of the mother liquor was 58 degrees C.

As a result, a nickel recovery was 96.8%. Also, the frequency of removal of adhering matter to the sulfuration reaction vessel was once per year.

### <Comparative Example 2>

A usual operation was performed under the same conditions as Example 1, except that a pressure inside the sulfuration reaction vessel was 190 kPaG.

As a result, a nickel recovery was 96.6%. Also, the frequency of removal of adhering matter to the sulfuration reaction vessel was once per year.

### <Comparative Example 3>

A usual operation was performed under the same conditions as Example 1, except that a temperature of the mother liquor was 72 degrees C.

As a result, a nickel recovery was 98.6%. Also, the frequency of removal of matter to the sulfuration reaction vessel was twice per year.

The following Table 1 shows the conditions of each Example and each Comparative Example, and the results of nickel recovery and frequency of removal of adhering matter.

**[Table 1]**

| | Reaction temperature (°C) | Pressure inside reaction vessel (kPaG) | Nickel recovery (%) | Frequency of removal of adhering matter (number of times/year) |
|---|---|---|---|---|
| Example 1 | 66 | 226 | 98.8 | 1 |
| Example 2 | 63 | 226 | 98.7 | 1 |
| Example 3 | 63 | 251 | 99.0 | 1 |
| Example 4 | 63 | 290 | 99.0 | 1 |
| Comparative Example 1 | 58 | 226 | 96.8 | 1 |
| Comparative Example 2 | 66 | 190 | 96.6 | 1 |
| Comparative Example 3 | 72 | 226 | 98.6 | 2 |

As shown in the above results, in Examples 1 to 4, in which the reaction temperature of the sulfuration reaction was controlled to be 60 to 70 degrees C and the pressure inside the reaction vessel was controlled to be 200 kPaG or more, a high nickel recovery of 98.7% or more was achieved. Particularly, in Examples 3 and 4 in which the pressure inside the sulfuration reaction vessel was controlled to be 250 kPaG or more, a high nickel recovery of 99.0% or more was achieved.

Furthermore, in Examples 1 to 4, the frequency of removal of adhering matter which was composed of a sulfide adhering to the inner wall of the sulfuration reaction vessel was controlled to be once per year, and was greatly reduced as compared with the prior technique. In other words, while a high nickel recovery was mainteined, formation of sulfide adhering to the inner walls of a sulfuration reaction vessel and a pipe was controlled, whereby an amount of the adhering matter was reduced.

In such Examples 1 to 4, it is considered that, by lowering a sulfuration reaction temperature as compared with the prior arts, the reaction rate of sulfuration reaction by the gas-liquid contact reaction of hydrogen sulfide gas and nickel in the mother liquor 16 was controlled, and formation of a sulfide on the inner wall of a sulfuration reaction vessel was controlled, whereby an amount of the adhering matter was reduced.

Furthermore, it is considered that, by lowering the sulfuration reaction temperature and also increasing the pressure inside a reaction vessel to the above-mentioned predetermined pressure value, a solubility of added hydrogen sulfide gas in the mother liquor was increased, whereby a concentration of hydrogen sulfide dissolved was increased. It is considered that the sulfuration reaction in the mother liquor 16 was thus made to efficiently proceed, and, while the formation of adhering matter was controlled, a high nickel recovery was maintained.

On the other hand, in Comparative Example 1, in which a reaction temperature was set at 58 degrees C and a pressure was set at 226 kPaG, the frequency of removal of adhering matter to the inner wall of the sulfuration reaction vessel was once per year, that is, the frequency was reduced as compared with the prior arts, but the nickel recovery was 96.8%. The reason of this is that, since the reaction temperature was set at less than 60 degrees C, a sulfuration reaction rate decreased too much, and accordingly, the reaction efficiency in the whole sulfuration reaction decreased.

In Comparative Example 2, in which a reaction temperature was set at 66 degrees C and a pressure was set at 190 kPaG, a nickel recovery was 96.6%. The reason of this is that, since the pressure was set at less than 200 kPaG, dissolution of hydrogen sulfide gas in the mother liquor 16 was not promoted, and a concentration of hydrogen sulfide dissolved was low, whereby a decrease in sulfuration reaction efficiency followed by a decrease in reaction temperature was not able to be prevented.

In Comparative Example 3, the reaction temperature was controlled to be relatively high, that is, 72 degrees C, and therefore the nickel recovery was comparatively high, that is, 98.6%, but, the frequency of removal of adhering matter to the inner wall of the sulfuration reaction vessel was twice per year. The reason of this is that the reaction temperature was set high, whereby the sulfuration reaction rate increased and accordingly formation of the adhering matter was promoted, and as a result, an adhering amount of a sulfide was increased.

## Claims

1. A method for controlling a reaction in a sulfuration reaction step of forming a sulfide containing nickel and a barren solution by blowing hydrogen sulfide gas into a sulfate solution containing at least nickel, wherein
a reaction temperature in a sulfuration reaction is controlled to be 60 to 70 degrees C, while a pressure inside a sulfuration reaction vessel is controlled to be 200 to 300 kPaG.

2. The method for controlling the reaction in the sulfuration reaction step according to claim 1, wherein
the pressure inside the sulfuration reaction vessel is controlled to be 250 to 300 kPaG.

3. The method for controlling the reaction in the sulfuration reaction step according to claim 1 or 2, wherein
the sulfide is circulated and used as a seed crystal, the sulfide having a nickel amount 4 to 6 times as much as a nickel amount contained in the sulfate solution.

4. The method for controlling the reaction in the sulfuration reaction step according to any one of claims 1 to 3, wherein
the sulfate solution containing nickel is a mother liquor recovered through a leaching step, a solid-liquid separation step, and a neutralization step, in hydrometallurgy based on high pressure acid leaching to recover nickel from nickel oxide ores.
